# EUROPÄISCHE PATENTSCHRIFT

(11) **EP 2 522 473 B1**
(45) Veröffentlichungstag und Bekanntmachung des Hinweises auf die Patenterteilung: **03.12.2014**
(21) Anmeldenummer: 11003960.9
(22) Anmeldetag: 13.05.2011
(51) Int. Cl.: B26D 1/60, B26D 3/16, B23D 25/04, B23D 31/00, B23K 26/08, B23K 26/38, B21D 43/28

(54) **Beschneidevorrichtung und Verfahren zum Beschneiden eines Metallhohlkörpers**
Cutting device and method for cutting a hollow metal body
Dispositif et procédé de découpage d'un corps creux en métal

(43) Veröffentlichungstag der Anmeldung: 14.11.2012
(73) Patentinhaber: HINTERKOPF GmbH, 73054 Eislingen (DE)
(72) Erfinder: Rempfer, Michael, 72639 Neuffen (DE); Osswald, Steffen, 73312 Geislingen (DE)
(74) Vertreter: Kocher, Mark Werner

(56) Entgegenhaltungen:
- EP-A2- 0 739 693
- DE-A1- 2 639 566
- DE-A1- 19 758 040
- US-A- 4 642 971

## Beschreibung

Die Erfindung betrifft eine Beschneidevorrichtung für Metallhohlkörper, insbesondere Aerosoldosen, mit einer Aufnahmeeinrichtung, die für eine Festlegung eines Metallhohlkörpers während eines Beschneidevorgangs ausgebildet ist und mit einer Schneideinrichtung, die für eine Durchführung des Beschneidevorgangs am Metallhohlkörper ausgebildet ist, sowie mit einer Antriebseinrichtung, die für eine Bereitstellung einer Förderbewegung für die Aufnahmeeinrichtung zwischen einer Ladestation und einer Entladestation ausgebildet ist. Ferner betrifft die Erfindung ein Verfahren zum Beschneiden von Metallhohlkörpern.

Die EP 0 739 693 A2 offenbart eine Vorrichtung zum Schneiden von Werkstücken, die entlang eines Weges relativ zu der Vorrichtung gefördert werden. Zu diesem Zweck umfasst die Vorrichtung einen Führungsarm, eine Werkzeughalterung und zwei Drehmechanismen, wobei die gewünschte Bewegung der Werkzeughalterung längs des Wegs des beweglichen Werkstücks durch die Drehmechanismen hervorgerufen wird. Am Werkzeugträger sind mehrere Düsen schwenkbar angeordnet, die die Bearbeitung der Werkstücke ermöglichen.

Aus der gattungsgebenden DE-OS 26 39 566 ist eine Beschneidevorrichtung für Metallhohlkörper bekannt. Diese Beschneidevorrichtung umfasst einen Werkstückrundtisch, an dem mehrere Aufnahmedorne angeordnet sind, die jeweils zur Aufnahme eines Metallhohlkörpers ausgebildet sind. Der Werkstückrundtisch ist für eine Rotation um eine zentral gelegene Drehachse ausgebildet. Die Aufnahmedorne sind derart angeordnet, dass Längsachsen der zylindrisch ausgebildeten Metallhohlkörper parallel zur Drehachse ausgerichtet sind. Zudem ist jeder der Aufnahmedorne um eine parallel zur Drehachse des Werkstückrundtischs ausgerichtete Arbeitsachse drehbar gelagert. Die auf den Aufnahmedornen aufgenommen Metallhohlkörper werden während der Drehbewegung des Werkstückrundtischs um die Arbeitsachsen der Aufnahmedorne rotiert, wodurch eine Überlagerung der beiden Drehbewegungen hervorgerufen wird. Während dieser überlagerten Bewegung wird der Metallhohlkörper mit einem Umfangsbereich an einem bogenförmigen, radial außenliegend dem Werkstückrundtisch zugeordneten Schneidmesser vorbeigeführt. Durch den Eingriff des Schneidmessers in den Umfangsbereich der jeweils vorbeigeführten Metallbehälter und die Überlagerung der beiden Drehbewegungen erfolgt ein endseitiger Beschnitt des jeweiligen Metallbehälters.

Die Aufgabe der Erfindung besteht darin, eine Beschneidevorrichtung und ein Verfahren zum Beschneiden von Metallhohlkörpern bereitzustellen, die eine präzisere Bearbeitung der Metallhohlkörper ermöglichen.

Diese Aufgabe wird gemäß einem ersten Aspekt für eine Beschneidevorrichtung der eingangs genannten Art mit den Merkmalen des Anspruchs 1 gelöst. Hierbei ist vorgesehen, dass die Aufnahmeeinrichtung und die Schneideinrichtung derart bewegbar sind, dass zumindest während des Beschneidevorgangs ein abschnittsweise gleichsinniger Bewegungsverlauf der Aufnahmeeinrichtung und der Schneideinrichtung gewährleistet ist, wobei die Schneideinrichtung zur Bereitstellung eines Schneidstrahls für einen berührungslosen Beschneidevorgang des Metallhohlkörpers ausgebildet ist und wobei die Schneideinrichtung derart eingerichtet ist, dass Abschnitte einer Bewegungsbahn der Aufnahmeeinrichtung und einer Bewegungsbahn eines Austrittsorts des von der Schneideinrichtung bereitstellbaren Schneidstrahls, entlang derer eine Schneidbearbeitung des Metallhohlkörpers vorgesehen ist, geometrisch ähnlich ausgebildet sind, und wobei wenigstens zwei Schneideinrichtungen vorgesehen sind, die längs aufeinanderfolgender Abschnitte der Bewegungsbahn der Metallhohlkörper bewegbar sind.

Jede der Schneideinrichtungen wirkt wenigstens über einen Teil der Wegstrecke der Aufnahmeeinrichtung zwischen der Ladestation und der Entladestation für die Metallhohlkörper auf den jeweils in der Aufnahmeeinrichtung aufgenommenen Metallhohlkörper ein und kann dabei den gewünschten Beschneidevorgang durchführen kann. Dabei kann es je nach Wahl des Beschneideverfahrens von Vorteil sein, wenn die Aufnahmeeinrichtung derart mit der Antriebseinrichtung gekoppelt ist, dass der darin aufgenommene Metallhohlkörper gegenüber der gleichsinnig mitgeführten Schneideinrichtung eine Relativbewegung, beispielsweise eine Rotationsbewegung oder eine Kombination einer Rotationsbewegung und einer Translationsbewegung, vollzieht. Vorzugsweise sind hierbei eine Bewegungsachse der Rotationsbewegung und eine Bewegungsachse der gegebenenfalls vorgesehenen Translationsbewegung parallel zueinander ausgerichtet, insbesondere quer zu einer Förderrichtung der Aufnahmeeinrichtungen zwischen der Ladestation und der Entladestation. Durch Einleitung einer Rotationsbewegung auf die Aufnahmeeinrichtung und den darin aufgenommenen Metallhohlkörper kann der Umfangsbereich des Metallhohlkörpers an der Schneideinrichtung vorbeigeführt werden. Durch Einleitung einer kombinierten Rotations- und Translationsbewegung auf den Metallhohlkörper kann beispielsweise erreicht werden, dass unterschiedliche Umfangsbereiche des Metallhohlkörpers mit variierendem Abstand gegenüber einem Bodenbereich des Metallhohlkörpers beschnitten werden. Während es üblicherweise angestrebt wird, eine gerade Schnittkante am Mündungsbereich des Metallhohlkörpers zu erzeugen, kann es im Einzelfall wünschenswert sein, den Metallhohlkörper am Mündungsbereich mit einer gekrümmten oder geknickten Schnittkante zu versehen. Dies wird insbesondere durch eine translatorische Relativbewegung zwischen Schneideinrichtung und Metallhohlkörper längs der Längsachse des Metallhohlkörpers erreicht. Bei einer vorteilhaften Ausführungsform einer Beschneidevorrichtung kann vorgesehen werden, dass eine gleichsinnige Bewegung zwischen der Aufnahmeeinrichtung und der zeitweilig zugeordneten Schneideinrichtung ausschließlich während des Beschneidevorgangs oder ab einer Phase kurz vor dem Beschneidevorgang bis nach einer Phase kurz nach dem Beschneidevorgang erfolgt und in anderen Zeitabschnitten keine gleichsinnige, sondern beispielsweise eine gegensinnige Bewegung der Schneideinrichtung gegenüber der Aufnahmeeinrichtung, beispielsweise als Rückhol- oder Reversierbewegung stattfindet.

Dabei ist vorgesehen, dass die Schneideinrichtungen zur Bereitstellung von Schneidstrahlenoder Elektronenstrahlen oder Fluidstrahlen oder Laserstrahlen für einen berührungslosen Beschneidevorgang des Metallhohlkörpers ausgebildet sind. Beim Einsatz von Schneidstrahlen treten keine oder nur geringe Kräfte auf den Metallhohlkörper auf. Da es sich bei dem Metallhohlkörper um eine dünnwandige, vorzugsweise zylindrisch geformte und zumindest am zum beschneidenden Endbereich endseitig offene Hülse handeln kann, treten bei bekannten Beschneidevorrichtungen unerwünschte Deformationen in radialer Richtung bezogen auf die Hülsengeometrie des Metallhohlkörpers auf. Diese unerwünschten Deformationen können zu einer Verschlechterung des Beschneideergebnisses führen. Beim Einsatz von Schneidstrahlen treten demgegenüber nur sehr geringe oder faktisch zu vernachlässigende Schneidkräfte am Metallhohlkörper auf, so dass eine Verschlechterung des Beschneideergebnisses aufgrund einer Deformation des Metallhohlkörpers nicht zu befürchten ist. Zudem kann in Abhängigkeit vom gewählten Schneidstrahl ein Toleranzband, innerhalb dessen ein angestrebtes Schneidergebnis liegt, vergrößert werden, so dass auch die Prozesssicherheit für den Beschneidevorgang erhöht wird.

Ferner ist vorgesehen, dass die Schneideinrichtungen derart eingerichtet ist, dass Abschnitte einer Bewegungsbahn der Aufnahmeeinrichtung und von Bewegungsbahnen von Austrittsorten der von den Schneideinrichtungen bereitstellbaren Schneidstrahlen, entlang derer eine Schneidbearbeitung des Metallhohlkörpers vorgesehen ist, geometrisch ähnlich, insbesondere identisch, ausgebildet sind. Hierdurch wird erreicht, dass ein Abstand zwischen dem Umfangsbereich des Metallhohlkörpers und dem Austrittsort des jeweiligen Schneidstrahls zumindest im Wesentlichen konstant gehalten werden kann, um ein möglichst gleichartiges Beschneideergebnis über den gesamten Umfangsbereich zu gewährleisten. Bei einer Ausbildung der Bewegungsbahn der Aufnahmeeinrichtung als Kreisbahn ist es vorteilhaft, wenn die Bewegungsbahn des Austrittsorts des jeweiligen Schneidstrahls ebenfalls kreisbahnförmig ausgebildet ist, wobei die beiden Kreisbahnen vorzugsweise konzentrisch zueinander ausgerichtet sind, so dass eine geometrische Ähnlichkeit der beiden Bewegungsbahnen gegeben ist. Bei einer geradlinigen Bewegungsbahn für die Aufnahmeeinrichtung verläuft die Bewegungsbahn für den Austrittsort des jeweiligen Schneidstrahls vorzugweise parallel, so dass hierdurch eine geometrische Identität für die beiden Bewegungsbahnen vorliegt.

Ferner können hierbei mehrere Metallhohlkörper zeitgleich oder in unmittelbarer zeitlicher Abfolge hintereinander beschnitten werden. Dabei kann vorgesehen sein, dass eine Bewegung der jeweiligen Schneideinrichtungen synchron zueinander stattfindet. Bei einer abweichenden Ausführungsform der Erfindung ist die Antriebseinrichtung für eine voneinander unabhängige Bewegung der jeweiligen Schneideinrichtungen ausgebildet. Damit kann beispielsweise eine Umschaltung einer zur Bereitstellung des Schneidstrahls vorgesehenen Schneidstrahlquelle zwischen den unterschiedlichen Schneideinrichtungen vorgesehen werden, so dass der Leistungsbedarf für die Schneidstrahlquelle gering gehalten werden kann.

Vorteilhafte Weiterbildungen der Erfindung sind Gegenstand der Unteransprüche.

Dabei ist es vorteilhaft, wenn die Schneideinrichtungen derart eingerichtet sind, dass die, insbesondere geradlinig oder gekrümmt ausgebildeten, Bewegungsbahnen der Metallhohlkörper und der Austrittsorte der Schneidstrahlen parallel, insbesondere äquidistant, zueinander verlaufen.

Vorzugsweise sind die wenigstens zwei Schneideinrichtungen längs aneinander angrenzender Abschnitte der Bewegungsbahn der Aufnahmeeinrichtung bewegbar.

In weiterer Ausgestaltung der Erfindung ist vorgesehen, dass die Schneideinrichtungen für eine zyklisch wiederkehrende Bewegung, insbesondere eine Reversierbewegung, ausgebildet sind. Dadurch kann die jeweilige Schneideinrichtung jeweils zwischen einem Startpunkt und einem Zielpunkt längs der Bewegungsbahn der Aufnahmeeinrichtungen hin- und herbewegt werden. Dabei wird während der gleichsinnigen mit der Aufnahmeeinrichtung durchgeführten Hinbewegung der jeweiligen Schneideinrichtung der Beschneidevorgang durchgeführt. Während der Rückkehrbewegung, die insbesondere mit einer anderen, beispielsweise höheren Bewegungsgeschwindigkeit durchgeführt wird, ist vorzugsweise keine Aussendung eines Schneidstrahls vorgesehen.

Zweckmäßig ist es, wenn mehrere Aufnahmeeinrichtungen an einem Werkstückrundtisch angeordnet sind, der um eine Drehachse drehbar gelagert ist und wenn die Antriebseinrichtung für eine Einleitung einer Drehbewegung auf die Aufnahmevorrichtung und für eine Einleitung von Schwenkbewegungen auf die Schneideinrichtungen ausgebildet ist. Bei Einsatz eines Werkstückrundtischs können mehrere Aufnahmeeinrichtungen an einer gemeinsamen Oberfläche des Werkstückrundtischs angebracht werden, der von der Antriebseinrichtung um eine Rotationsachse bewegbar ist. Bevorzugt sind die Aufnahmeeinrichtungen derart ausgebildet, dass Längsachsen der darin aufgenommenen Metallhohlkörper parallel zur Drehachse des Werkstückrundtischs ausgerichtet sind. Bei der Rotation des Werkstückrundtischs passieren die Aufnahmeeinrichtungen längs einer kreisförmig ausgebildeten Bewegungsbahn zunächst eine Ladestation, an der eine Zuführung der Metallhohlkörper vorgenommen werden kann. Anschließend werden die in den Aufnahmeeinrichtungen fixierten Metallhohlkörper längs der Bewegungsbahn in einer kontinuierlichen oder schrittweisen Bewegung weitertransportiert und mittels der jeweiligen Schneideinrichtung randseitig beschnitten. Abschließend werden die Metallhohlkörper an einer Entladestation aus den Aufnahmeeinrichtungen entnommen. Die Metallhohlkörper vollziehen während der Bewegung zwischen der Ladestation und der Entladestation eine Bewegung längs der als Kreisbahnabschnitt ausgebildeten Bewegungsbahn. Zusätzlich kann vorgesehen werden, dass die Metallhohlkörper jeweils um ihre eigene Längs- oder Symmetrieachse rotiert werden, hierzu können die Aufnahmeeinrichtungen entsprechend am Werkstückrundtisch gelagert und mit der Antriebseinrichtung verbunden sein. Besonders bevorzugt vollziehen die Schneideinrichtungen jeweils eine Schwenkbewegung längs eines Kreisbahnabschnitts, der konzentrisch zur Drehachse des Werkstückrundtischs angeordnet ist. Somit kann während der gesamten Bearbeitungsdauer eine äquidistante Anordnung zwischen dem Metallhohlkörper und der jeweiligen Schneideinrichtung erzielt werden. Dies gilt insbesondere dann, wenn zusätzlich die Winkelgeschwindigkeiten der Rotationsbewegung des Werkstückrundtischs und der Schwenkbewegung der jeweiligen Schneideinrichtung gleich sind.

Bei einer vorteilhaften Weiterbildung der Erfindung können in einem von der Drehachse des Werkstückrundtischs ausgehenden Winkelbereich zwischen der Beladestation und der Entladestation mehrere Schneideinrichtungen angeordnet sein, die zueinander benachbarte, insbesondere aneinander angrenzende, Schwenkwinkelbereiche überstreichen. Dadurch können mehrere Metallhohlkörper gleichzeitig oder in unmittelbar aufeinanderfolgender zeitlicher Abfolge beschnitten werden.

Bevorzugt sind die Schneideinrichtung um Schwenkachsen schwenkbar gelagert, wobei die Schwenkachsen parallel, insbesondere koaxial, zur Drehachse des Werkstückrundtischs ausgerichtet sind.

Vorteilhaft ist es, wenn ein von den Schneideinrichtungen zwischen einer Startposition und einer Endposition überstrichener Schwenkwinkel kleiner als ein von der Drehachse des Werkstückrundtischs ausgehender Winkelbereich zwischen einer Ladestation und einer Entladestation ausgebildet ist.

Die Aufgabe der Erfindung wird gemäß einem zweiten Aspekt für eine Beschneidevorrichtung der eingangs genannten Art mit den Merkmalen des Anspruchs 10 gelöst. Hierbei ist vorgesehen, dass die Aufnahmeeinrichtung und die Schneideinrichtung derart bewegbar sind, dass zumindest während des Beschneidevorgangs ein abschnittsweise gleichsinniger Bewegungsverlauf der Aufnahmeeinrichtung und der Schneideinrichtung gewährleistet ist, wobei die Schneideinrichtung einen Strahlteiler zur Bereitstellung von wenigstens zwei Schneidstrahlen für einen berührungslosen Beschneidevorgang des Metallhohlkörpers umfasst und wobei die Schneideinrichtung derart eingerichtet ist, dass Abschnitte einer Bewegungsbahn der Aufnahmeeinrichtung und einer Bewegungsbahn von Austrittsorten der von der Schneideinrichtung bereitstellbaren Schneidstrahlen, entlang derer eine Schneidbearbeitung des Metallhohlkörpers vorgesehen ist, geometrisch ähnlich ausgebildet sind.

Die Aufgabe der Erfindung wird gemäß einem dritten Aspekt mit einem Verfahren zum Beschneiden eines Metallhohlkörpers gemäß dem Anspruch 11 gelöst. Hierbei sind die folgenden Schritte vorgesehen: Aufnehmen eines Metallhohlkörpers an einer Aufnahmeeinrichtung, Bewegen des Metallhohlkörpers längs einer Bewegungsbahn, Durchführen eines Schneidvorgangs mittels wenigstens zweier berührungslos arbeitender Schneideinrichtungen, die längs eines Teilabschnitts der Bewegungsbahn des Metallhohlkörpers längs aufeinanderfolgender Abschnitte der Bewegungsbahn der Metallhohlkörper bewegt werden, Entfernen des Metallhohlkörpers von der Aufnahmeeinrichtung.

Die Aufgabe der Erfindung wird gemäß einem vierten Aspekt mit einem Verfahren zum Beschneiden eines Metallhohlkörpers gemäß dem Anspruch 12 gelöst. Hierbei sind die folgenden Schritte vorgesehen: Aufnehmen eines Metallhohlkörpers an einer Aufnahmeeinrichtung, Bewegen des Metallhohlkörpers längs einer Bewegungsbahn, Durchführen eines Schneidvorgangs mittels einer berührungslos arbeitenden, mit einem Strahlteiler zur Bereitstellung von wenigstens zwei Schneidstahlen ausgerüsteten Schneideinrichtung, die längs eines Teilabschnitts der Bewegungsbahn des Metallhohlkörpers längs aufeinanderfolgender Abschnitte der Bewegungsbahn der Metallhohlkörper bewegt wird, Entfernen des Metallhohlkörpers von der Aufnahmeeinrichtung.

Vorteilhafte Ausführungsformen der Erfindung sind in der Zeichnung dargestellt. Hierbei zeigt:
- Figur 1: eine schematische Darstellung einer ersten Ausführungsform einer Beschneidevorrichtung mit einem drehbar gelagerten Werkstückrundtisch und zwei schwenkbeweglich gelagerten Schneideinrichtungen,
- Figur 2: eine schematische Darstellung einer ersten Ausführungsform einer Beschneidevorrichtung mit einem drehbar gelagerten Werkstückrundtisch und einer am Werkstückrundtisch drehbeweglich gelagerten Schneideinrichtung mit zwei Schneidstrahlen,
- Figur 3: eine Abwandlung der zweiten Ausführungsform,
- Figur 4: eine schematische Seitenansicht einer dritten ausführungsform einer Beschneidevorrichtung mit einer linearen Anordnung der Aufnahmeeinrichtungen und translatorish bewegbaren Schneideinrichtungen und
- Figur 5: eine Draufsicht auf die in Figur 4 dargestellte Ausführungsform

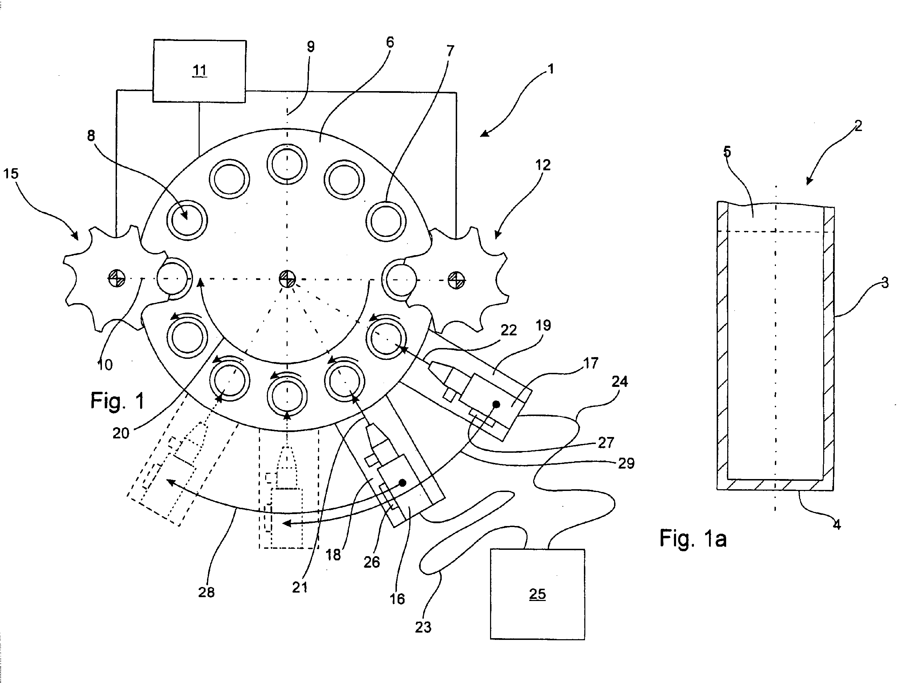

Eine in der Figur 1 dargestellte erste Ausführungsform einer Beschneidevorrichtung 1 für Metallhohkörper, insbesondere Aerosoldosen ist beispielhaft zur Integration in eine nicht dargestellte Aerosoldosenfertigungslinie vorgesehen. Die Beschneidevorrichtung 1 dient einem endseitigen Beschnitt eines in der Figur 1a schematisch dargestellten Metallhohlkörpers 2, der auch als Dosenrohling bezeichnet wird. Der Metallhohlkörper 2 ist exemplarish in einem vorhergehenden Arbeitsschritt aus einer Ronde, beispeilsweise in Fließpressverfahren oder im Tiefziehverfahren, umgeformt worden und weist einen hülsenförmigen, insbesondere zylindrisch ausgebildeten Wandbereich 3 und einen einseitig angeformten Boden 4 auf. Aufgrund des Herstellungsverfahrens für den Metallhohlkörper 2 ist ein dem Boden 4 abgewandter Mündungsbereich 5 des Metallhohlkörper 2 nicht maßhaltig und muss daher vor der weiteren Bearbeitung, beispielsweise einem Einziehvorgang, auf ein vorgebbares Maß und gegebenenfalls auf eine vorgegebene Geometrie gebracht werden. Hierzu dient die Beschneidevorrichtung 1, mit deren Hilfe ein Beschnitt des Metallhohlkörpers 2 im Bereich der Mündungsöffnung 5 vorgenommen werden kann.

Die Beschneidevorrichtung 1 umfasst exemplarisch einen Werkstückrundtisch 6, an dem mehrere, vorzugsweise in gleicher Winkelteilung angeordnete, beispielhaft als Spannzange ausgebildete Aufnahmeeinrichtungen 7 angeordnet sind. Die Aufnahmeeinrichtungen weisen jeweils eine Ausnehmung 8 auf, die zur Aufnahme jeweils eines Metallhohlkörpers 2 ausgebildet ist und in der eine nicht näher dargestellte Spanneinrichtung vorgesehen ist, die zur zeitweiligen Festlegung der Metallhohlkörper 2 in der jeweiligen Aufnahmeeinrichtung 7 dient. Der Werkstückrundtisch 6 ist um eine senkrecht zur Darstellungsebene der Figur 1 ausgerichtete, durch den Schnittpunkt der Symmetrieachsen 9 und 10 verlaufende Drehachse drehbar an einem nicht näher dargestellten Maschinengestell gelagert. Eine exemplarisch als elektrisches Steuergerät ausgebildete Antriebseinrichtung 11 ist zur Bereitstellung von elektrischer Energie an nicht näher dargestellte elektrische Antriebe vorgesehen. Einer dieser Antriebe dient zur Einleitung einer kontinuierlichen oder intermittierenden Drehbewegung auf den Werkstückrundtisch 6.

An einem radial außenliegenden Bereich des Werkstückrundtischs 6 sind eine exemplarisch als Ladestern ausgebildete Ladestation 12 und eine exemplarisch als Entladestern ausgebildete Entladestation 15 angeordnet. Die Ladestation 12 ist mit einem nicht näher dargestellten Elektromotor ausgerüstet, der zur Einleitung einer Drehbewegung ausgebildet ist und kann dadurch um eine parallel zur Drehachse des Werkstückrundtischs 6 ausgerichtete Drehachse gedreht werden. In gleicher Weise gilt dies für die Entladestation 15.

Dem Werkstückrundtisch 6 sind exemplarisch zwei Schneideinrichtungen 16 und 17 zugeordnet, die jeweils fest an einem Schwenkträger 18 bzw. 19 angeordnet sind. Die beiden Schwenkträger 18, 19 sind jeweils schwenkbeweglich gegenüber dem Werkstückrundtisch 6 angeordnet, wobei Schwenkachsen der Schwenkträger exemplarisch konzentrisch zur Drehachse des Werkstückrundtischs 6 angeordnet sind. Den Schwenkträgern 18, 19 ist ein nicht näher dargestellter Schwenkantrieb zugeordnet, bei dem es sich beispielhaft um einen elektrischen oder fluidischen Schwenkantrieb oder um eine mit dem Werkstückrundtisch 6 gekoppelte Getriebeeinrichtung, insbesondere Nockenanordnung, handeln kann. Je nach Ausführung des Schwenkantriebs sind die beiden Schwenkträger 18, 19 miteinander gekoppelt oder können unabhängig voneinander, insbesondere auch unabhängig von der Drehbewegung des Werkstückrundtischs 6 verschwenkt werden.

Die an der Ladestation 12 mittels einer nicht näher dargestellten Fördereinrichtung, beispielsweise einem Förderband, bereitgestellten Metallhohlkörper 2 werden von der Ladestation 12 unter Zuhilfenahme eines nicht dargestellten Ladestößels durch eine Translationsbewegung parallel zur Drehachse in die gegenüberliegend angeordnete Ausnehmung 8 der jeweiligen Aufnahmeeinrichtung 7 eingeschoben. Dort findet eine Arretierung des jeweiligen Metallhohlkörpers 2 statt, so dass dieser drehfest in der Aufnahmeeinrichtung 7 aufgenommen ist. Anschließend wird die Aufnahmeeinrichtung 7 und der darin aufgenommene Metallhohlkörper 2 längs einer kreisabschnittsförmigen Bewegungsbahn 20 bis zur Entladestation 15 transportiert. Bei der dargestellten Ausführungsform einer Beschneidevorrichtung 1 werden die drehbar am Werkstückrundtisch 6 gelagerten Aufnahmeeinrichtungen 7 zumindest in einem Teilbereich längs der Bewegungsbahn 20 um ihre eigene Achse rotiert, so dass die darin aufgenommenen Metallhohlkörper 2 eine Überlagerung zweier Drehbewegungen erfahren.

Die an den beiden Schwenkträgern 18, 19 festgelegten Schneideinrichtungen 16, 17 sind zur Abgabe eines energiereichen Schneidstrahls 21, 22 ausgebildet. Bei dem Schneidstrahl 21, 22 handelt es sich exemplarisch um einen Laserstrahl, mit dem der gewünschte Beschnitt des Metallhohlkörpers 2 durchgeführt werden kann. Die Zuführung des Schneidstrahls 21, 22 erfolgt exemplarisch über flexible Lichtleitkabel 23, 24, die mit einer beispielhaft als Laserlichtquelle 25 ausgeführten Strahlungsquelle gekoppelt sind. Bei einer nicht näher dargestellten Ausführungsform ist eine Zuführung der Schneidstrahlen 21, 22 zu den Schneideinrichtungen 16, 17 über ein Spiegelsystem vorgesehen, wobei ein optischer Pfad für die Schneidstrahlen abschnittsweise konzentrisch zur Drehachse des Werkstückrundtischs 6 verläuft, um eine Unabhängigkeit des optischen Pfads von den Schwenkbewegungen der Schwenkträger 18, 19 zu erreichen.

Die Schwenkbewegung der Schwenkträger 18, 19 und der daran aufgenommenen Schneideinrichtungen 16, 17 längs der Bewegungsbahnen 28, 29 werden derart mit der Bewegung der Metallhohlkörper 2 längs der Bewegungsbahn 20 koordiniert, dass die jeweilige Schneideinrichtung 16, 17 zumindest solange in einem zulässigen Schneidabstand gegenüber dem Metallhohlkörper 2 angeordnet ist, bis der Metallhohlkörper 2 eine vollständige Umdrehung gegenüber dem Schneidstrahl 21, 22 vollzogen hat. Dadurch wird eine Abtrennung eines unerwünschten Überstands am Mündungsbereich 5 des Metallhohlkörpers 2 ermöglicht. Bevorzugt sind die Bewegungsbahnen 28, 29 kreisabschnittsförmig ausgebildet, insbesondere konzentrisch zur Bewegungsbahn 20 ausgerichtet.

Nachdem die beiden Schwenkträger 18, 19 die beiden Schneideinrichtungen 16, 17 längs der Bewegungsbahn 20 mitgeführt haben und die gewünschte Abtrennung der jeweiligen Überstände an den Metallhohlkörpern 2 vorgenommen wurde, kehren die beiden Schwenkträger 18, 19 aus der in Figur 1 gestrichelt dargestellten Endlage längs ihrer Bewegungsbahnen 28, 29 wieder in die durchgezogen dargestellte Anfangslage zurück, um die nächsten Metallhohlkörper 2 bearbeiten zu können. Besonders vorteilhaft ist es, wenn die beiden Schneideinrichtungen 16, 17 jeweils abwechselnd betrieben werden, da hierdurch der Energiebedarf für den Schneidvorgang gering gehalten werden kann. Bei einer derartigen Betriebsweise für die Schneideinrichtungen 16, 17 ist es vorteilhaft, wenn die beiden Schwenkträger 18, 19 unabhängig voneinander bewegt werden können. Während in der Figur 1 eine überlappende Anordnung der Schwenkbereiche der Schwenkträger 18, 19 vorgesehen ist, kann bei einer nicht dargestellten Ausführungsform der Beschneidevorrichtung vorgesehen sein, dass die Schwenkbereiche der Schwenkträger benachbart angeordnet sind, insbesondere aneinander angrenzen.

Exemplarisch sind die Schneideinrichtungen 16, 17 mit jeweils einem Linearsteller 26, 27 versehen, der zur Bereitstellung einer Linearbewegung für die Schneideinrichtungen 16, 17 in radialer Richtung bezogen auf den Werkstückrundtisch 6 ausgebildet ist und somit eine Einstellung eines vorteilhaften Abstands zwischen der jeweiligen Schneideinrichtung 16, 17 und dem zu bearbeitenden Metallhohlkörper 2 erlaubt. Vorzugsweise sind den Schneideinrichtungen 16, 17 nicht näher dargestellte Sensormittel zugeordnet, die zur Erfassung eines Abstands zwischen dem Umfangsbereich des jeweiligen Metallhohlkörpers 2 und der zugeordneten Schneideinrichtung 16, 17 ausgebildet sind und eine Regelung des Abstands ermöglichen. Ergänzend oder alternativ ist ein optisches System in den Schneideinrichtungen 16, 17 mit einer nicht näher dargestellten Stelleinrichtung versehen, um eine Brennebene des abgegebenen Schneidstrahls 21, 22 in Abhängigkeit von Eigenschaften des zu bearbeitenden Metallhohlkörpers 2 und/oder des Abstands zwischen dem Umfangsbereich des Metallhohlkörpers 2 und der zugeordneten Schneideinrichtung 16, 17 einstellen zu können. Gegebenenfalls ist ergänzend oder alternativ eine nicht näher dargestellte Hubeinrichtung vorgesehen, die für eine translatorische Verlagerung der Schneideinrichtung 16, 17 gegenüber dem jeweiligen Schwenkträger 18, 19 parallel zur Drehachse des Werkstückrundtischs 6 vorgesehen ist. Dadurch können andere als geradlinige Schnittverläufe am Metallhohlkörper 2 erzielt werden. Beispielsweise kann der vom Metallhohlkörper 2 abzutrennende Ring in zwei oder mehrere Stücke zerteilt werden, um ein Entsorgungsvolumen zu reduzieren. Derartige Mittel zur Abstandseinstellung, Abstandsdetektion, Einstellung der Brenn- oder Fokusebene und Hubeinstellung sind auch für die nachfolgend näher beschriebenen Ausführungsformen von Beschneidevorrichtungen einsetzbar.

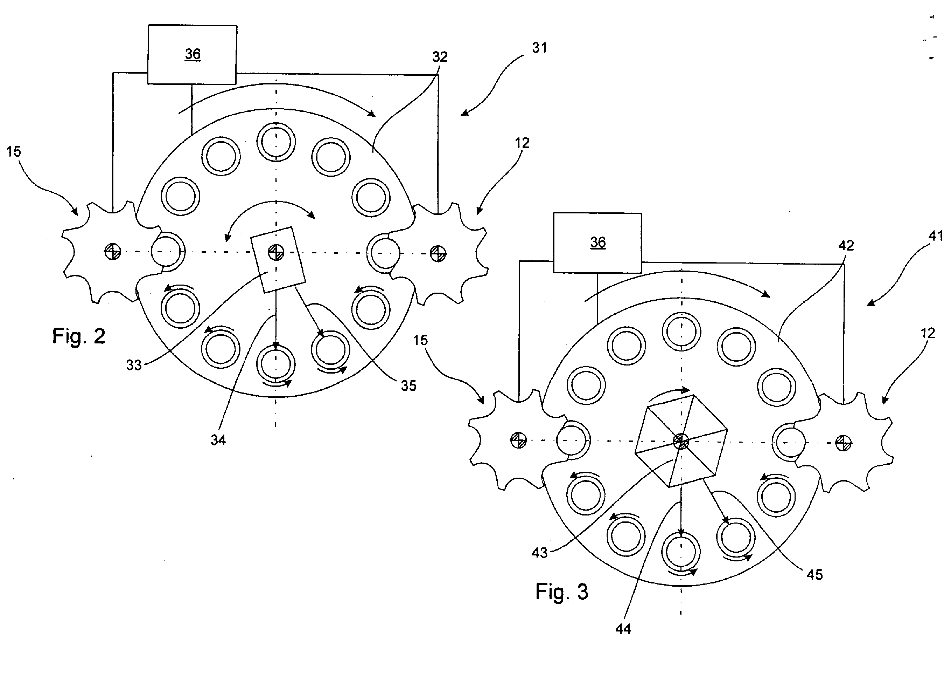

Bei der in Figur 2 dargestellten Ausführungsform einer Beschneidevorrichtung 31 sind dem Werkstückrundtisch 32 die aus der Figur 1 bekannte Ladestation 12 und die ebenfalls bekannte Entladestation 15 zugeordnet. Zudem sind die Aufnahmeeinrichtungen 7 identisch ausgeführt. Abweichend von der Ausführungsform gemäß der Figur 1 ist bei der Ausführungsform gemäß der Figur 2 eine zentrale Einkopplung des Schneidstrahls längs eines, beispielhaft optischen, Strahlpfads vorgesehen, der abschnittsweise konzentrisch zur Drehachse des Werkstückrundtischs 6 verläuft und somit eine von der Drehbewegung der Schneideinrichtung 33 unabhängig ist. Die Schneideinrichtung 33 ist um eine vorzugsweise konzentrisch zur Drehachse des Werkstückrundtischs 32 ausgerichtete Schwenkachse relativ zum Werkstückrundtisch 32 verdrehbar. Sie umfasst bei einer exemplarischen Ausgestaltung des Schneidstrahls als Laserstrahl einen nicht näher dargestellten Strahlteiler, der eine Aufteilung des Schneidstrahls in die beiden aus der Schneideinrichtung 33 austretenden Schneidstrahlen 34, 35. Der Schneideinrichtung 33 ist ein von der Antriebseinrichtung 36 ansteuerbarer, nicht näher dargestellter Schwenkantrieb zugeordnet, der eine bereichsweise Mitführung der beiden Schneidstrahlen 34, 35 mit den auf der kreisabschnittsförmigen Bewegungsbahn 20 bewegten Metallhohlkörpern 2 ermöglicht. Der Schwenkantrieb ist für eine intermittierende Reversierbewegung der Schneideinrichtung 33 ausgebildet, er ermöglicht somit eine bereichsweise Mitführung der beiden Schneidstrahlen 34, 35 längs der Bewegungsbahn der Metallhohlkörper 2. Hierbei ist vorzugsweise vorgesehen, dass eine Winkelgeschwindigkeit, also ein pro Zeiteinheit überstrichener Winkelbereich, der Schneideinrichtung 33 gleich einer Winkelgeschwindigkeit des Werkstückrundtischs 32 gewählt ist. An diese gleichsinnige Bewegung der Schneidstrahlen 34, 35 mit den in den Aufnahmeeinrichtungen 7 schließt sich eine Rückführbewegung für die Schneideinrichtung 33 an, die entgegen der Bewegungsrichtung des Werkstückrundtischs 32 stattfindet. Die Winkelgeschwindigkeit bei dieser Rückführbewegung ist vorzugsweise größer, insbesondere um einen ganzzahligen Faktor größer, als die Winkelgeschwindigkeit während der gleichsinnigen Bewegung von Schneideinrichtung 33 und Werkstückrundtisch 32. Es versteht sich, dass die Anzahl der von der Schneideinrichtung 33 bereitstellbaren Schneidstrahlen 34, 35 auch größer zwei sein kann.

Bei der in Figur 3 dargestellten Ausführungsform einer Beschneidevorrichtung 41 ist die Schneideinrichtung 43 exemplarisch in sechs jeweils dreieckig ausgebildete Segmente unterteilt. Jedes der Segmente enthält exemplarisch einen nicht dargestellten Umlenkspiegel und einen ebenfalls nicht dargestellten Strahlteiler. Der Umlenkspiegel ermöglicht eine Weiterleitung eines koaxial zur Drehachse des Werkstückrundtischs 42 eingekoppelten Schneidstrahls auf jeweils ein Segment. In dem Segment findet dann mittels des Strahlteilers eine Aufteilung des Schneidstrahls in die aus dem Segment austretenden beispielhaften zwei Schneidstrahlen 44, 45 statt. Da die Schneideinrichtung 43 fest mit dem Werkstückrundtisch 42 gekoppelt ist, werden die Schneidstrahlen 44, 45 synchron zu den gegenüberliegend angeordneten, in den Aufnahmeeinrichtungen 7 festgelegten Metallhohlkörpern 2 mitgeführt. Dabei ist die Rotationsgeschwindigkeit der Aufnahmeeinrichtungen 7 um die jeweils eigene Achse derart festgelegt, dass bei der exemplarischen Segmentierung der Schneideinrichtung 43 in sechs Segmente eine vollständige Umdrehung des Metallhohlkörpers 2 in einem vom Werkstückrundtisch 42 überstrichenen Schwenkbereich, der weniger als 60 Grad beträgt, vorgesehen. Durch eine entsprechende Zuführung des Schneidstrahls und die Funktionsweise der in den Segmenten vorgesehenen Umlenkspiegel findet eine von der rotatorischen Stellung des Werkstückrundtischs 42 abhängige Ablenkung des Schneidstrahls in das jeweilige Segment der Schneideinrichtung 42 statt, so dass keine zusätzlichen Antriebsmittel für die Schneideinrichtung 42 erforderlich sind.

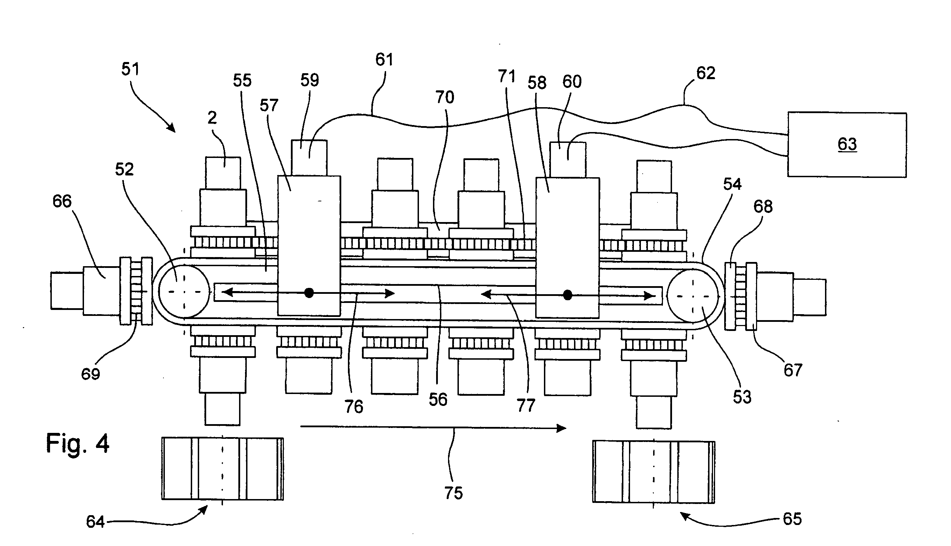

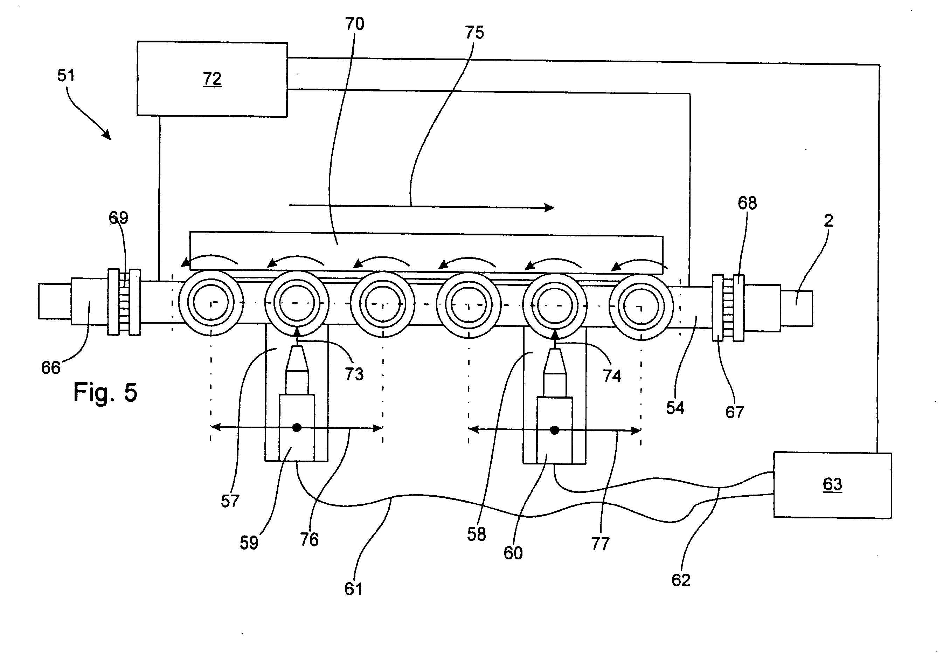

Die in den Figuren 4 und 5 dargestellte weitere Ausführungsform einer Beschneidevorrichtung 51 unterscheidet sich von den Ausführungsformen gemäß den Figuren 1 bis 3 dadurch, dass die Metallhohlkörper 2 mittels einer endlos um zwei voneinander beabstandete Kettenräder 52, 53 umlaufenden Förderkette 54 gefördert werden. Die beiden Kettenräder 52, 53 sind an einer Führungsschiene 55 drehbar gelagert, einem der beiden Kettenräder 52, 53 ist ein nicht näher dargestellter Antriebsmotor für die gewünschte Umlaufbewegung der Förderkette 54 zugeordnet. An der Führungsschiene 55 ist eine Führungsnut 56 ausgebildet, in der exemplarisch zwei Schlitten 57, 58 verschieblich gelagert sind. Die beiden Schlitten 57, 58 tragen jeweils eine Schneideinrichtung 59, 60. Die Schlitten 57, 58 sind beispielhaft als elektrodynamische Lineardirektantriebe ausgebildet und ermöglichen somit eine jeweils voneinander unabhängige Translationsbewegung längs der Führungsnut 56.

Jede der Schneideinrichtungen 59, 60 ist über eine flexible Strahlleitung 61, 62, die beispielsweise als Lichtleiter ausgebildet sein kann, mit einer Strahlquelle 63, exemplarisch einer Laserquelle, gekoppelt. Exemplarisch sind an einer Unterseite der Beschneidevorrichtung 51 eine als Ladestern ausgebildete Ladestation 64 und eine als Entladestern ausgebildete Entladestation 65 vorgesehen. Die an der Förderkette 54 drehbar angeordneten Aufnahmeeinrichtungen 66 weisen an einem Umfangsbereich zwei Führungsringe 67, 68 und einen dazwischen angeordneten Zahnring 69 auf. Die Führungsringe 67, 68 dienen zur Anlage an eine Führungsleiste 70, an der eine Zahnstange 71 angeordnet ist, mit deren Hilfe eine Rotationsbewegung der Aufnahmeeinrichtungen 66 hervorgerufen werden kann, wenn diese translatorisch längs der Führungsleiste 70 bewegt werden. Die unabhängig voneinander agierenden Schneidköpfe 59, 60 werden von einer Steuereinrichtung 72, die eine Antriebseinrichtung zur Ansteuerung des Antriebsmotors für die Förderkette 54 und der Schlitten 57, 58 umfasst, derart angesteuert, dass sie einen Schneidstrahl 73, 74 während einer gleichsinnigen Translationsbewegung längs einer geradlinigen Bewegungsbahn 75 für die jeweils gegenüberliegenden und bewegten Metallhohlkörper 2 abgeben können. Bei einer Rückführbewegung längs der geradlinigen Bewegungsbahn 76, 77 ist eine Abschaltung des Schneidstrahls 73, 74 vorgesehen. Vorzugsweise werden die beiden Schlitten 57, 58 derart gesteuert, dass jeweils einer der Schlitten 57, 58 eine gleichsinnige Bewegung mit den Metallhohlkörpern 2 vornimmt, während der andere Schlitten die Rückführbewegung durchführt, so dass zu jedem Zeitpunkt jeweils nur Energie für einen Schneidstrahl 73, 74 bereitgestellt werden muss. Beispielhaft sind die Bewegungsbahnen 76, 77 der beiden Schlitten 57, 58 benachbart und angrenzend zueinander angeordnet. Bei einer nicht dargestellten Ausführungsform einer derart aufgebauten Beschneidevorrichtung kann auch eine überlappende Anordnung der Bewegungsbahnen für die Schlitten vorgesehen sein.

Bei einer nicht näher dargestellten Ausführungsform der Beschneidevorrichtung sind die Schneideinrichtungen derart eingerichtet, dass der Schneidstrahl bezogen auf den zu bearbeitenden Metallhohlkörper in radialer Richtung nach außen abgegeben wird. Hierzu wird die Schneideinrichtung vorzugsweise derart kompakt gestaltet, dass zumindest der Austrittsbereich des Schneidstrahls in das Innere des Metallhohlkörpers eingetaucht werden kann.

## Patentansprüche

1. Beschneidevorrichtung für Metallhohlkörper (2), insbesondere Aerosoldosen, mit einer Aufnahmeeinrichtung (7; 66), die für eine Festlegung eines Metallhohlkörpers (2) während eines Beschneidevorgangs ausgebildet ist und mit einer Schneideinrichtung (16, 17; 59, 60), die für eine Durchführung des Beschneidevorgangs am Metallhohlkörper (2) ausgebildet ist, sowie mit einer Antriebseinrichtung (11; 72), die für eine Bereitstellung einer Förderbewegung für die Aufnahmeeinrichtung (7; 66) zwischen einer Ladestation (12; 64) und einer Entladestation (15; 65) ausgebildet ist, **dadurch gekennzeichnet, dass** die Aufnahmeeinrichtung (7; 66) und die Schneideinrichtung (16, 17; 59, 60) derart bewegbar sind, dass zumindest während des Beschneidevorgangs ein abschnittsweise gleichsinniger Bewegungsverlauf der Aufnahmeeinrichtung (7; 66) und der Schneideinrichtung (16, 17; 59, 60) gewährleistet ist, wobei die Schneideinrichtung (16, 17; 59, 60) zur Bereitstellung eines Schneidstrahls für einen berührungslosen Beschneidevorgang des Metallhohlkörpers (2) ausgebildet ist und wobei die Schneideinrichtung (16, 17; 59, 60) derart eingerichtet ist, dass Abschnitte einer Bewegungsbahn (20; 75) der Aufnahmeeinrichtung (7; 66) und einer Bewegungsbahn (28, 29; 76, 77) eines Austrittsorts des von der Schneideinrichtung (16, 17; 59, 60) bereitstellbaren Schneidstrahls (21, 22; 73, 74), entlang derer eine Schneidbearbeitung des Metallhohlkörpers (2) vorgesehen ist, geometrisch ähnlich ausgebildet sind, und wobei wenigstens zwei Schneideinrichtungen (16, 17; 59, 60) vorgesehen sind, die längs aufeinanderfolgender Abschnitte der Bewegungsbahn (20; 75) der Metallhohlkörper (2) bewegbar sind.

2. Beschneidevorrichtung nach Anspruch 1, **dadurch gekennzeichnet, dass** die Schneideinrichtungen (16, 17; 59, 60) zur Bereitstellung von Elektronenstrahlen oder Fluidstrahlen oder Laserstrahlen (2) ausgebildet sind.

3. Beschneidevorrichtung nach Anspruch 2, **dadurch gekennzeichnet, dass** die Schneideinrichtungen (16, 17; 59, 60) derart eingerichtet sind, dass Abschnitte einer Bewegungsbahn (20; 75) der Aufnahmeeinrichtung (7; 66) und einer Bewegungsbahn (28, 29; 76, 77) von Austrittsorten der von den Schneideinrichtungen (16, 17; 59, 60) bereitstellbaren Schneidstrahlen (21, 22; 73, 74), entlang derer eine Schneidbearbeitung des Metallhohlkörpers (2) vorgesehen ist, identisch ausgebildet sind.

4. Beschneidevorrichtung nach Anspruch 1, 2 oder 3, **dadurch gekennzeichnet, dass** die Schneideinrichtungen (16, 17; 59, 60) derart eingerichtet sind, dass die, insbesondere geradlinig oder gekrümmt ausgebildeten, Bewegungsbahnen (20, 28, 29; 75, 76, 77) der Aufnahmeeinrichtung (7; 66) und der Austrittsorte der Schneidstrahlen (21, 22; 73, 74) parallel zueinander verlaufen.

5. Beschneidevorrichtung nach Anspruch 1, **dadurch gekennzeichnet, dass** die wenigstens zwei Schneideinrichtungen (16, 17; 59, 60) längs aneinander angrenzender Abschnitte der Bewegungsbahn (20; 75) der Metallhohlkörper (2) bewegbar sind.

6. Beschneidevorrichtung nach einem der vorhergehenden Ansprüche, **dadurch gekennzeichnet, dass** die Schneideinrichtungen (16, 17; 59, 60) für eine zyklisch wiederkehrende Bewegung, insbesondere eine Reversierbewegung, ausgebildet ist.

7. Beschneidevorrichtung nach einem der vorhergehenden Ansprüche, **dadurch gekennzeichnet, dass** mehrere Aufnahmeeinrichtungen (7; 66) an einem Werkstückrundtisch (6; 32; 42) angeordnet sind, der um eine Drehachse drehbar gelagert ist und dass die Antriebseinrichtung (11; 72) für eine Einleitung einer Drehbewegung auf die Aufnahmevorrichtungen (7, 66) und für eine Einleitung von Schwenkbewegungen auf die Schneidenrichtungen (16, 17; 59, 60) ausgebildet ist.

8. Beschneidevorrichtung nach Anspruch 7, **dadurch gekennzeichnet, dass** die Schneideinrichtungen (16, 17; 59, 60) um Schwenkachsen schwenkbar gelagert sind, wobei die Schwenkachsen parallel, insbesondere koaxial, zur Drehachse des Werkstückrundtischs (6) ausgerichtet sind.

9. Beschneidevorrichtung nach Anspruch 7 oder 8, **dadurch gekennzeichnet, dass** ein von den Schneideinrichtungen (16, 17; 59, 60) zwischen einer Startposition und einer Endposition überstrichener Schwenkwinkel kleiner als ein von der Drehachse des Werkstückrundtischs (6) ausgehender Winkelbereich zwischen einer Beladestation (12, 15; 64, 65) und einer Entladestation ausgebildet ist.

10. Beschneidevorrichtung für Metallhohlkörper (2), insbesondere Aerosoldosen, mit einer Aufnahmeeinrichtung (7), die für eine Festlegung eines Metallhohlkörpers (2) während eines Beschneidevorgangs ausgebildet ist und mit einer Schneideinrichtung (33; 43), die für eine Durchführung des Beschneidevorgangs am Metallhohlkörper (2) ausgebildet ist, sowie mit einer Antriebseinrichtung (36), die für eine Bereitstellung einer Förderbewegung für die Aufnahmeeinrichtung (7) zwischen einer Ladestation (12) und einer Entladestation (15) ausgebildet ist, **dadurch gekennzeichnet, dass** die Aufnahmeeinrichtung (7) und die Schneideinrichtung (33; 43) derart bewegbar sind, dass zumindest während des
Beschneidevorgangs ein abschnittsweise gleichsinniger Bewegungsverlauf der Aufnahmeeinrichtung (7) und der Schneideinrichtung (33; 43) gewährleistet ist, wobei die Schneideinrichtung (33; 43) einen Strahlteiler zur Bereitstellung von wenigstens zwei Schneidstrahlen (34, 35; 44, 45) für einen berührungslosen Beschneidevorgang des Metallhohlkörpers (2) umfasst und wobei die Schneideinrichtung (33; 43) derart eingerichtet ist, dass Abschnitte einer Bewegungsbahn (20) der Aufnahmeeinrichtung (7) und einer Bewegungsbahn von Austrittsorten der von der Schneideinrichtung (33; 43) bereitstellbaren Schneidstrahlen (34, 35; 44, 45), entlang derer eine Schneidbearbeitung des Metallhohlkörpers (2) vorgesehen ist, geometrisch ähnlich ausgebildet sind.

11. Verfahren zum Beschneiden eines Metallhohlkörpers (2) mit den Schritten: Aufnehmen eines Metallhohlkörpers (2) an einer Aufnahmeeinrichtung (7, 66), Bewegen des Metallhohlkörpers (2) längs einer Bewegungsbahn (20, 28, 29; 75, 76, 77), Durchführen eines Schneidvorgangs mittels wenigstens zweier berührungslos arbeitender Schneideinrichtungen (16, 17; 33 43; 59, 60), die längs eines Teilabschnitts der Bewegungsbahn (20, 28, 29; 75, 76, 77) des Metallhohlkörpers (2) längs-aufeinanderfolgender Abschnitte der Bewegungsbahn (20; 75) der Metallhohlkörper (2) bewegt werden, Entfernen des Metallhohlkörpers von der Aufnahmeeinrichtung (7; 66).

12. Verfahren zum Beschneiden eines Metallhohlkörpers (2) mit den Schritten: Aufnehmen eines Metallhohlkörpers (2) an einer Aufnahmeeinrichtung (7), Bewegen des Metallhohlkörpers (2) längs einer Bewegungsbahn (20), Durchführen eines Schneidvorgangs mittels einer berührungslos arbeitenden, mit einem Strahlteiler zur Bereitstellung von wenigstens zwei Schneidstahlen ausgerüsteten Schneideinrichtung (33; 43), die längs eines Teilabschnitts der Bewegungsbahn (20) des Metallhohlkörpers (2) längs aufeinanderfolgender Abschnitte der Bewegungsbahn (20) der Metallhohlkörper (2) bewegt wird, Entfernen des Metallhohlkörpers von der Aufnahmeeinrichtung (7).

## Claims

1. Cutting device for metal hollow bodies (2), in particular for aerosol cans, comprising a pickup device (7; 66) designed for a location of a metal hollow body (2) during a cutting process and a cutting unit (16, 17; 59, 60) designed for carrying out the cutting process on the metal hollow body (2), and further comprising a drive device (11; 72) designed for providing a conveying movement for the pickup device (7; 66) between a loading station (12; 64) and an unloading station (15; 65), **characterised in that** the pickup device (7; 66) and the cutting unit (16, 17; 59, 60) are movable in such a way that, at least during the cutting process, an equidirectional movement sequence of the pickup device (7; 66) and the cutting unit (16, 17; 59, 60) is ensured in some sections, wherein the cutting unit (16, 17; 59, 60) is designed for the provision of a cutting jet/beam for a non-contact cutting process of the metal hollow body (2), and wherein the cutting unit (16, 17; 59, 60) is configured such that sections of a movement path (20; 75) of the pickup device (7; 66) and of a movement path (28, 29; 76, 77) of an exit point of the cutting jet/beam (21, 22; 73, 74) provided by the cutting unit (16, 17; 59, 60), along which sections a cutting process of the metal hollow body (2) is provided, are designed to be geometrically similar, and wherein at least two cutting units (16, 17; 59, 60) which are movable along successive sections of the movement path (20; 75) of the metal hollow bodies (2) are provided.

2. Cutting device according to claim 1, **characterised in that** the cutting units (16, 17; 59, 60) are designed for the provision of electron beams or fluid jets or laser beams (2).

3. Cutting device according to claim 2, **characterised in that** the cutting units (16, 17; 59, 60) are configured such that sections of a movement path (20; 75) of the pickup device (7; 66) and of a movement path (28, 29; 76, 77) of exit points of the cutting jets/beams (21, 22; 73, 74) provided by the cutting unit (16, 17; 59, 60), along which sections a cutting process of the metal hollow body (2) is provided, are designed to be identical.

4. Cutting device according to claim 1, 2 or 3, **characterised in that** the cutting units (16, 17; 59, 60) are configured such that the movement paths (20, 28, 29; 75, 76, 77) of the pickup device (7; 66) and of the exit points of the cutting jets/beams (21, 22; 73, 74), which are designed to be straight or curved in particular, extend parallel to one another.

5. Cutting device according to claim 1, **characterised in that** the at least two cutting units (16, 17; 59, 60) are movable along adjoining sections of the movement path (20; 75) of the metal hollow bodies (2).

6. Cutting device according to any of the preceding claims, **characterised in that** the cutting units (16, 17; 59, 60) are designed for a cyclically recurring movement, in particular a reversing movement.

7. Cutting device according to any of the preceding claims, **characterised in that** several pickup devices (7; 66) are provided at a work rotary table (6; 32; 42) mounted for rotation about an axis of rotation, and **in that** the drive device (11; 72) is designed for an introduction of a rotary movement into the pickup devices (7; 66) and for an introduction of a pivoting movement into the cutting units (16, 17; 59, 60).

8. Cutting device according to claim 7, **characterised in that** the cutting units (16, 17; 59, 60) are pivotably mounted for pivoting about pivoting axes, the pivoting axes being oriented parallel to, in particular coaxial with, the axis of rotation of the work rotary table (6).

9. Cutting device according to claim 7 or 8, **characterised in that** a pivoting angle covered by the cutting units (16, 17; 59, 60) between a starting position and an end position is smaller than an angle range starting from the axis of rotation of the work rotary table (6) between a loading station (12, 15; 64, 65) and an unloading station.

10. Cutting device for metal hollow bodies (2), in particular for aerosol cans, comprising a pickup device (7) designed for a location of a metal hollow body (2) during a cutting process and a cutting unit (33; 43) designed for carrying out the cutting process on the metal hollow body (2), and further comprising a drive device (36) designed for providing a conveying movement for the pickup device (7) between a loading station (12) and an unloading station (15), **characterised in that** the pickup device (7) and the cutting unit (33; 43) are movable in such a way that, at least during the cutting process, an equidirectional movement sequence of the pickup device (7) and the cutting unit (33; 34) is ensured in some sections, wherein the cutting unit (33; 34) comprises a jet/beam splitter for the provision of at least two cutting jets/beams (34, 35; 44, 45) for a non-contact cutting process of the metal hollow body (2), and wherein the cutting unit (33; 43) is configured such that sections of a movement path (20) of the pickup device (7) and of a movement path of exit points of the cutting jets/beams (34, 35; 44, 45) provided by the cutting unit (33; 43), along which sections a cutting process of the metal hollow body (2) is provided, are designed to be geometrically similar.

11. Method for cutting a metal hollow body (2), comprising the steps of: picking up a metal hollow body (2) at a pickup device (7; 66), moving the metal hollow body (2) along a movement path (20, 28, 29; 75, 76, 77), executing a cutting process by means of at least two cutting units (16, 17; 33, 43; 59, 60) which operate in a non-contact manner and which are moved along a part-section of the movement path (20, 28, 29; 75, 76, 77) of the metal hollow bodies (2), removal of the metal hollow body (2) from the pickup device (7; 66).

12. Method for cutting a metal hollow body (2), comprising the steps of: picking up a metal hollow body (2) at a pickup device (7), moving the metal hollow body (2) along a movement path (20) executing a cutting process by means of a cutting unit (33; 43) which operate in a non-contact manner, is provided with a jet/beam splitter for the provision of at least two cutting jets/beams and which is moved along a part-section of the movement path (20) of the metal hollow bodies (2) along successive sections of the movement path (20) of the metal hollow bodies (2), removal of the metal hollow body from the pickup device (7).

## Revendications

1. Dispositif de découpage pour des corps creux en métal (2), en particulier des bombes aérosol, avec un dispositif de réception (7 ; 66) qui est réalisé pour une fixation d'un corps creux en métal (2) pendant un processus de découpage et avec un dispositif de coupe (16, 17 ; 59, 60) qui est conçu pour une réalisation du processus de découpage sur le corps creux en métal (2), ainsi qu'avec un dispositif d'entraînement (11 ; 72) qui est réalisé pour une mise à disposition d'un mouvement de transport pour le dispositif de réception (7 ; 66) entre un poste de chargement (12 ; 64) et un poste de déchargement (15 ; 65), **caractérisé en ce que** le dispositif de réception (7 ; 66) et le dispositif de coupe (16, 17 ; 59, 60) sont mobiles de telle manière que, au moins pendant le processus de découpage, une trajectoire du mouvement dans le même sens par section du dispositif de réception (7 ; 66) et du dispositif de coupe (16, 17 ; 59, 60) soit garantie, le dispositif de coupe (16, 17 ; 59, 60) étant réalisé pour la mise à disposition d'un faisceau de coupe pour un processus de découpage sans contact du corps creux en métal (2), et le dispositif de coupe (16, 17 ; 59, 60) étant aménagé de telle manière que des sections d'une trajectoire (20 ; 75) du dispositif de réception (7 ; 66) et d'une trajectoire (28, 29 ; 76, 77) d'un lieu de sortie du faisceau de coupe (21, 22 ; 73, 74) pouvant être mis à disposition par le dispositif de coupe (16, 17 ; 59, 60), le long duquel un usinage par coupe du corps creux en métal (2) est prévu, soient réalisées de manière semblable géométriquement, et au moins deux dispositifs de coupe (16, 17 ; 59, 60) étant prévus, lesquels sont mobiles le long de sections se succédant de la trajectoire (20 ; 75) du corps creux en métal (2).

2. Dispositif de découpage selon la revendication 1, **caractérisé en ce que** les dispositifs de coupe (16, 17 ; 59, 60) sont réalisés pour la mise à disposition de faisceaux d'électrons ou jets de fluide ou faisceaux laser (2).

3. Dispositif de découpage selon la revendication 2, **caractérisé en ce que** les dispositifs de coupe (16, 17 ; 59, 60) sont aménagés de telle manière que des sections d'une trajectoire (20 ; 75) du dispositif de réception (7 ; 66) et d'une trajectoire (28, 29 ; 76, 77) des lieux de sortie des faisceaux de coupe (21, 22 ; 73, 74) pouvant être mis à disposition par les dispositifs de coupe (16, 17 ; 59, 60), le long desquels un usinage par coupe du corps creux en métal (2) est prévu, soient réalisées de manière identique.

4. Dispositif de découpage selon la revendication 1, 2 ou 3, **caractérisé en ce que** les dispositifs de coupe (16, 17 ; 59, 60) sont aménagés de telle manière que les trajectoires (20, 28, 29 ; 75, 76, 77) réalisées en particulier de manière linéaire ou courbée du dispositif de réception (7 ; 66) et des lieux de sortie des faisceaux de coupe (21, 22 ; 73, 74) s'étendent parallèlement les uns aux autres.

5. Dispositif de découpage selon la revendication 1, **caractérisé en ce que** les au moins deux dispositifs de coupe (16, 17 ; 59, 60) sont mobiles le long des sections contiguës les unes aux autres de la trajectoire (20 ; 75) des corps creux en métal (2).

6. Dispositif de découpage selon l'une quelconque des revendications précédentes, **caractérisé en ce que** les dispositifs de coupe (16, 17 ; 59, 60) sont réalisés pour un mouvement cyclique récurrent, en particulier un mouvement réversible.

7. Dispositif de découpage selon l'une quelconque des revendications précédentes, **caractérisé en ce que** plusieurs dispositifs de réception (7 ; 66) sont agencés sur une table ronde porte-pièce (6 ; 32 ; 42) qui est logée de manière à pouvoir tourner autour d'un axe de rotation et **en ce que** le dispositif d'entraînement (11 ; 72) est réalisé pour une introduction d'un mouvement de rotation sur les dispositifs de réception (7, 66) et pour une introduction de mouvements de pivotement sur les dispositifs de coupe (16, 17 ; 59, 60).

8. Dispositif de découpage selon la revendication 7, **caractérisé en ce que** les dispositifs de coupe (16, 17 ; 59, 60) sont logés de manière à pouvoir pivoter autour d'axes de pivotement, les axes de pivotement étant orientés parallèlement, en particulier coaxialement à l'axe de rotation de la table ronde porte-pièce (6).

9. Dispositif de découpage selon la revendication 7 ou 8, **caractérisé en ce qu'**un angle de pivotement couvert par les dispositifs de coupe (16, 17 ; 59, 60) entre une position de départ et une position de fin est plus petit qu'une plage angulaire sortant de l'axe de rotation de la table ronde porte-pièce (6) entre un poste de chargement (12, 15 ; 64, 65) et un poste de déchargement.

10. Dispositif de découpage pour des corps creux en métal (2), en particulier des bombes aérosol, avec un dispositif de réception (7) qui est réalisé pour une fixation d'un corps creux en métal (2) pendant un processus de découpage et avec un dispositif de coupe (33 ; 43) qui est réalisé pour une réalisation du processus de découpage sur le corps creux en métal (2), ainsi qu'avec un dispositif d'entraînement (36) qui est réalisé pour une mise à disposition d'un mouvement de transport pour le dispositif de réception (7) entre un poste de chargement (12) et un poste de déchargement (15), **caractérisé en ce que** le dispositif de réception (7) et le dispositif de coupe (33 ; 43) sont mobiles de telle manière qu'au moins pendant le processus de découpage, une trajectoire du mouvement dans le même sens par section du dispositif de réception (7) et du dispositif de coupe (33 ; 43) soit garantie, le dispositif de coupe (33 ; 43) comportant un séparateur de faisceaux pour la mise à disposition d'au moins deux faisceaux de coupe (34, 35 ; 44, 45) pour un processus de découpage sans contact du corps creux en métal (2) et le dispositif de coupe (33 ; 43) étant aménagé de telle manière que des sections d'une trajectoire (20) du dispositif de réception (7) et d'une trajectoire de lieux de sortie des faisceaux de coupe (34, 35 ; 44, 45) pouvant être mis à disposition par le dispositif de coupe (33 ; 43), le long desquels un usinage par coupe du corps creux en métal (2) est prévu, soient réalisées de manière similaire géométriquement.

11. Procédé pour l'ébavurage d'un corps creux en métal (2) avec les étapes suivantes : la réception d'un corps creux en métal (2) sur un dispositif de réception (7, 66), le mouvement du corps creux en métal (2) le long d'une trajectoire (20, 28, 29 ; 75, 76, 77), la réalisation d'un processus de coupe à l'aide d'au moins deux dispositifs de coupe (16, 17 ; 33, 43 ; 59, 60) travaillant sans contact qui sont déplacés le long d'une section partielle de la trajectoire (20, 28, 29 ; 75, 76, 77) du corps creux en métal (2) le long de sections se succédant de la trajectoire (20 ; 75) des corps creux en métal (2), le retrait du corps creux en métal du dispositif de réception (7 ; 66).

12. Procédé pour l'ébavurage d'un corps creux en métal (2) avec les étapes suivantes : la réception d'un corps creux en métal (2) sur un dispositif de réception (7), le mouvement du corps creux en métal (2) le long d'une trajectoire (20), la réalisation d'un processus de coupe à l'aide d'un dispositif de coupe (33 ; 43) travaillant sans contact, équipé d'un séparateur de faisceaux pour la mise à disposition d'au moins deux faisceaux de coupe qui est déplacé le long d'une section partielle de la trajectoire (20) du corps creux en métal (2) le long de sections se succédant de la trajectoire (20) des corps creux en métal (2), le retrait du corps creux en métal du dispositif de réception (7).
